# EUROPÄISCHE PATENTSCHRIFT

(11) **EP 2 941 798 B1**
(45) Veröffentlichungstag und Bekanntmachung des Hinweises auf die Patenterteilung: **19.09.2018**
(21) Anmeldenummer: 13826994.9
(22) Anmeldetag: 12.12.2013
(51) Int. Cl.: H01R 13/52, H01R 13/74, F16J 15/06, F16J 15/10

(54) **UMWELTDICHTES STECKVERBINDERGEHÄUSE**
ENVIRONMENTALLY SEALED PLUG CONNECTOR HOUSING
BOÎTIER DE CONNECTEUR ENFICHABLE ÉTANCHE AU MILIEU AMBIANT

(30) Priorität: 03.01.2013 DE 102013100028
(43) Veröffentlichungstag der Anmeldung: 11.11.2015
(73) Patentinhaber: Harting Electric GmbH & Co. KG, 32339 Espelkamp (DE)
(72) Erfinder: BEISCHER, Thomas, 32339 Espelkamp (DE); HORSTMANN, Jens, 32339 Espelkamp (DE)
(86) Internationale Anmeldenummer: PCT/DE2013/100419
(87) Internationale Veröffentlichungsnummer: WO 2014/106504

(56) Entgegenhaltungen:
- EP-A1- 2 107 280
- EP-A2- 1 617 067
- EP-A2- 2 503 232
- WO-A1-89/08212
- WO-A1-2005/121611
- DE-U1-202004 017 562
- US-A1- 2006 141 858
- US-A1- 2008 197 697
- US-A1- 2009 255 703

## Beschreibung

Die Erfindung betrifft ein Steckverbindergehäuse nach dem Oberbegriff des unabhängigen Anspruchs 1.

Derartige Steckverbindergehäuse werden benötigt um auf Montageflächen von Gehäuse oder Geräten befestigt zu werden. Über diese kann eine Verbindung mittels eines passenden Steckverbinders zu dem Gehäuse oder Gerät hergestellt werden. Steckverbindergehäuse dieser Art stellen eine Abdichtung der Steckverbindung mit beispielsweise sensiblen Bau- oder Kontaktteilen gegen äußere Industrieatmosphären sicher.

Es ist durchaus bekannt, zusammenfügbare und mit einem Flansch versehene Gehäuse, mit einer dem Flanschen zugeordneten Dichtung gegen Umwelteinflüsse zu sichern.
Dabei ist jedoch nicht gewährleistet, dass die Schraubverbindung, mit welcher der Flansch befestigt wird, im Bereich der Durchführungen zwischen Schraube, Dichtung und Flansch, ebenfalls umweltdicht ist.

### Stand der Technik

Die DE10357881A1 zeigt eine Dichtung zur Anordnung zwischen einander gegenüberliegenden Dichtflächen, insbesondere Flanschdichtung, für einen an einem Gehäuse vorgesehenen Gehäuseflansch und einer entsprechend ausgebildeten Montagewand, wobei die Flanschdichtung eine Bodenplatte mit einem außen umlaufenden Kragen aufweist, an dem, beabstandet über der Bodenplatte, mindestens eine Flächenanformung vorgesehen ist, die mit der darunterliegenden Bodenfläche mindestens eine Tasche bildet, dass in der Tasche übereinander angeordnete Öffnungen vorgesehen sind, und dass mindestens eine der Öffnungen eine Dichtlippe aufweist.

Nachteilig wirkt sich dabei aus, dass die vorgeschlagene Dichtung den gewünschten Effekt nicht erzielt, da die Flächenanformung durch das Einschrauben einer Schraube verdreht und dabei zerstört wird. Somit ist keine ausreichende Abdichtung der Schraubverbindungen gewährleistet.

Die US2008/0197697 A1 zeigt eine hydraulische Bremseinheit für Kraftfahrzeuge. Das Gehäuse der Bremseinheit weist Befestigungsbohrungen mit einem Überlapp auf, der durch die Befestigungsschrauben platt gedrückt wird, wodurch die Dichtigkeit des Gehäuses erhöht wird.

Die DE 20 2004 017 562 U1 zeigt ein Steckverbindergehäuse zur Montage auf einer Montagefläche, bestehende aus einem Grundkörper und einem am Grundkörper angeformten Befestigungsflansch, wobei der Befestigungsflansch zumindest eine stufenförmige Befestigungsbohrung aufweist.

Die Produktion einer stufenförmigen Befestigungsbohrung ist recht komplex und daher teuer.

Auch andere aus dem Stand der Technik bekannte Lösungen weisen stets das Problem auf, dass im Bereich der Schraubverbindungen keine ausreichende Dichtwirkung erzielt wird.

Ein weiterer Nachteil, der aus dem Stand der Technik bekannten Steckverbindergehäuse mit Dichtungen ist, dass Dichtungen die nicht angeformt oder angeklebt sind, durch einen übermäßigen Andruck in der Montage sich verformen. Dies kann so weit führen, dass die Dichtung zwischen Gehäuse und Montagefläche weggedrückt wird und keine Dichtwirkung entfalten kann.

### Aufgabenstellung

Die Aufgabe der Erfindung besteht darin, ein Steckverbindungsgehäuse so auszubilden, dass eine ausreichende Abdichtung gegen Umwelteinflüsse gewährleistet wird.

Die Aufgabe wird durch die Merkmale des kennzeichnenden Teils des unabhängigen Anspruchs 1 gelöst.

Vorteilhafte Ausgestaltungen der Erfindung sind in den Unteransprüchen angegeben.

Bei der Erfindung handelt es sich um ein Steckverbindergehäuse wie es aus dem Stand der Technik soweit bereits bekannt ist. Bestehend aus einem Grundkörper zur Aufnahme von Steck- und/oder Isolierkörper mit darin gehaltenen Kontaktstiften und/oder Buchsen. Der Grundkörper weist eine Steckseite auf, welche zur Kontaktierung eines entsprechenden Steckverbinders vorgesehen ist und mit diesem ggf. verrastet werden kann.

Auf die Steckseite des Grundkörpers, sowie die im Grundkörper aufgenommenen Komponenten wird nicht weiter eingegangen. Hier sind aus dem Stand der Technik viele Ausführungsformen bekannt, welche auf die vorliegende Erfindung keinen weiteren Einfluss haben und entsprechend austauschbar sind.

Zudem weist der Grundkörper eine Montageseite auf, welcher ein Befestigungsflansch angeordnet ist. Der Befestigungsflansch kann dabei mit dem Grundkörper einstückig ausgeformt sein, oder auch separat an diesen befestigt sein. Derartige Befestigungsflansche sind ebenfalls aus dem Stand der Technik bereits bekannt. Vorteilshaft sind im Befestigungsflansch Befestigungsbohrungen vorgesehen, mittels welcher der Befestigungsflansch mit einer Montagefläche verschraubt werden kann.

Die Montage wird vorzugsweise durch mit Schrauben vorgenommen. Jedoch sind auch andere aus dem Stand der Technik bekannt Arten der Montage wie z.B. Vernieten möglich. Zur Vereinfachung wird im folgenden Text lediglich von einer Schraubverbindung ausgegangen, wobei hier auch sämtliche funktionsgleiche Verbindungsarten gemeint sind.

Zwischen dem Befestigungsflansch und der Montagefläche wird zweckmäßig ein Dichtelement angeordnet. Dieses wird durch Befestigung des Steckverbindergehäuses auf der Montagefläche zwischen diesen gepresst und erzielt so seine Dichtwirkung.

Erfindungsgemäß verfügt das Dichtungselement über mindestens eine Dichthülse. Vorteilshaft ist die Anzahl der Dichthülsen auf die Anzahl der Befestigungsbohrungen im Befestigungsflansch abgestimmt. Die Dichthülsen, welche wie auch das Dichtelement aus vorzugsweise einem elastischen Dichtmaterial bestehen, sind jeweils einer Befestigungsbohrung zugeordnet.

Entsprechend der vorliegenden Erfindung durchdringen die Dichthülsen jeweils eine Befestigungsbohrung zumindest vollständig. Wenn das Dichtungselement vollständig am Befestigungsflansch anliegt, stehen die Dichthülsen so zumindest um einen geringen Überstand aus der Befestigungsbohrung heraus.

Der Überstand der der Dichthülsen ist vorzugsweise in einem Bereich von 0,05 mm bis 1,0 mm zu dimensionieren. Vorteilhafter ist ein Bereich von 0,1 mm bis 0,5 mm. Und bevorzugten vorteilhaft ist ein Bereich von 0,2 mm bis 0,4 mm.

Der Überstand der Dichthülsen bezweckt dabei eine direkte Abdichtung von Schrauben, die zur Montage des Steckverbindergehäuses auf einer Montagefläche verwendet werden. Dabei wird der Überstand beim Festschrauben zusammengepresst und so radial nach außen gepresst. Demnach verformt der Überstand der Dichthülsen sich so, dass er eine Abdichtung zwischen der Schraube und dem Befestigungsflansch bewirkt.

Um die Stauchung / Pressung des Dichtungselements zu begrenzen und eine Zerstörung dieses zu vermeiden, ist zudem eine Begrenzung des zu stauchenden Wegs vorgesehen. Dafür ist dem Befestigungsflansch ein umlaufender Kragen zugeordnet. Der umlaufende Kragen umgibt das Dichtungselement zumindest bereichsweise.

Die Höhe des Kragens ist dabei geringer als die Stärke des Dichtungselements. Dadurch erstreckt sich das Dichtungselements zumindest teilweise über den Kragen. Eine Pressung des Dichtungselements ist jedoch nur noch um die Differenz möglich, die sich das Dichtungselement über den Kragen erstreckt.

Weitere vorteilhafte Ausgestaltungen des Steckverbindergehäuses sind in den Unteransprüchen angegeben.

### Ausführungsbeispiel

Ein Ausführungsbeispiel der Erfindung ist in den Zeichnungen dargestellt und wird im Folgenden näher erläutert. Es zeigen:
- Fig. 1: ein Steckverbindergehäuse in räumlicher Darstellung;
- Fig. 2: ein Dichtungselement in räumlicher Darstellung;
- Fig. 3: ein weiteres Dichtungselement aus einer weiteren Perspektive;
- Fig. 4: ein Steckverbindergehäuse mit Dichtungselement; und
- Fig. 5: ein Steckverbindergehäuse mit Dichtungselement in einer Schnittdarstellung.

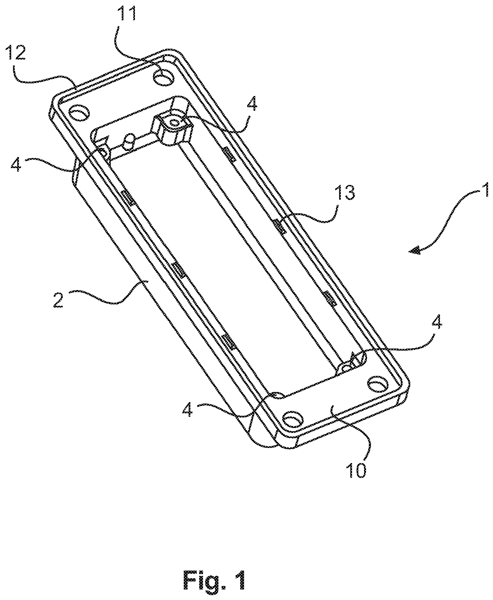

Die Fig. 1 zeigt ein erfindungsgemäßes Steckverbindergehäuse 1 in räumlicher Darstellung. Das Steckverbindergehäuse 1 wird von einem Grundkörper 2 und einem Befestigungsflansch 10 gebildet. Der Grundkörper 2 ist im Wesentlichen hohl ausgebildetes und zur Aufnahme von Steckverbinderbauteilen vorgesehen.

Die Steckverbinderbauteile können dabei Isolierkörper, modulare Aufnahmerahmen, oder ähnliche aus dem Stand der Technik bekannten Teile eines Steckverbinders sein. Zur Befestigung der Steckverbinderbauteile sind im Grundkörper 2 mehrere - hier vier - Befestigungsaufnahmen 4 vorgesehen. An diesem können eingesetzte Bauteile befestigt werden.

Der Grundkörper 1 weist zudem an zwei Seiten jeweils eine Öffnung auf. Eine - hier unten dargestellt - Öffnung zur Kontaktierung des Steckverbindergehäuses 1 mit einem Gegensteckverbinder. Die in den Grundkörper 2 eingesetzten Steckverbinderbauteile ragen im montierten Zustand in diese Öffnung um mit den Bauteilen eines Gegensteckverbinder zu kontaktieren.

In Fig. 1 oben dargestellt, weist der Grundkörper 2 eine zweite Öffnung auf, welche zur Weiterführung von mit aufgenommenen Steckverbinderbauteilen verbunden Leitungen dient. Diese können über die zweite Öffnung in ein Gerät oder Gehäuse geführt werden.

An der Seite der zweiten Öffnung weist der Grundkörper 2 den Befestigungsflansch 10 auf. Dieser umgibt zweckmäßig die zweite Öffnung, durch welche Leitungen geführt werden.

Der Befestigungsflansch 10 ist mir mehreren Befestigungsbohrungen 11 versehen. Mittels dieser kann der Befestigungsflansch 11 mit Schrauben oder ähnlichen Befestigungsmitteln an einer Montagefläche 3 befestigt werden. In dieser Ausführungsform sind im Befestigungsflansch vier Befestigungsbohrungen vorgesehen.

Erfindungsgemäß weist der Befestigungsflansch 10 einen umlaufenden Kragen 12 auf. Diese verläuft einmal entlang des Randes des Befestigungsflansches 10. Auch sind Ausführungsformen mit einem nicht komplett durchgehenden Kragen 12 denkbar. Erfindungsgemäß ist ein komplett umlaufender Kragen 12 nicht nötig. Auch sind Kragensegmente denkbar, welche als Auflagepunkte für die Montage dienen.

Zudem sind dem Befestigungsflansch 10 erfindungsgemäß mehrere Nocken 13 angeformt. Die hier sechs Nocken 13 sind zur Fixierung eines Dichtungselements 20 vorgesehen, welches zwischen dem Befestigungsflansch 10 und einer Montagefläche 3 angeordnet ist.

Erfindungsgemäß befinden sich sowohl der Kragen 12 als auch die Nocken 13 auf der dem Grundkörper 2 abgewandten Seite des Befestigungsflansches 10.

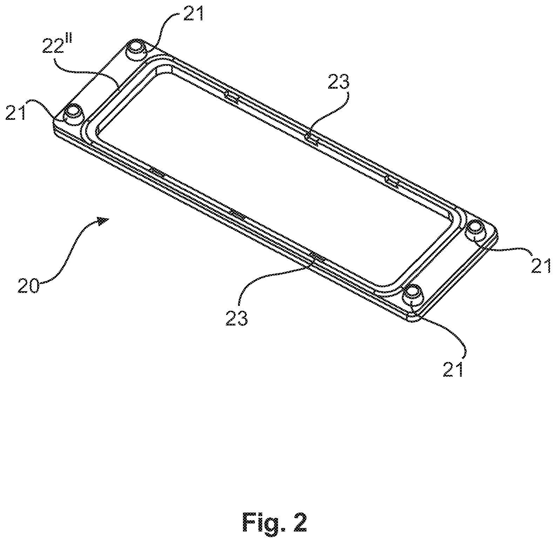

Fig. 2 zeigt ein erfindungsgemäßes Dichtungselement 20 in räumlicher Darstellung. Das flache, aus einem elastischen, dichtfunktionsaufweisenden Material gefertigte Element hat in etwa die Form des Befestigungsflansches 10.

Die dem Befestigungsflansch 10 zuweisende Fläche des Dichtungselements 20 - hier sichtbar - weist erfindungsgemäß mehrere Dichthülsen 21 auf. Die hier vier - entsprechend der Befestigungsbohrungen 11 - Dichthülsen 21 sind so ausgerichtet, dass sie mit den Befestigungsbohrungen 11 des Befestigungsflansches 10 fluchten.

Bei Anlegen des Dichtungselements 20 an den Befestigungsflansch 10 dringen die Dichthülsen 21 jeweils in die zugeordneten Befestigungsbohrungen 11 ein.

Um eine bessere Abdichtung zwischen dem Befestigungsflansch 10 und dem Dichtungselement 20 zu erzielen ist dem Dichtungselement 20 zusätzlich eine Dichtlippe 22" angeformt. Die Dichtlippe 22" verläuft durchgehend um die Öffnung zur Durchführung von Leitungen und dichtet den Spalt zwischen Befestigungsflansch 10 und Dichtungselement 20 ab.

Um ein Verrutschen des Dichtungselements 20 bei der Montage des Steckverbindergehäuses 1 auf einer Montagefläche 3 zu verhindern, sind dem Dichtungselement 20 zusätzlich Vertiefungen 23 eingeformt. Die Vertiefungen 23 sind zur Aufnahme der Nocken 13 des Befestigungsflansches vorgesehen. Dadurch ist ein Verrutschen des Dichtungselements 20, speziell in den dünnwandigen Bereichen, nicht möglich.

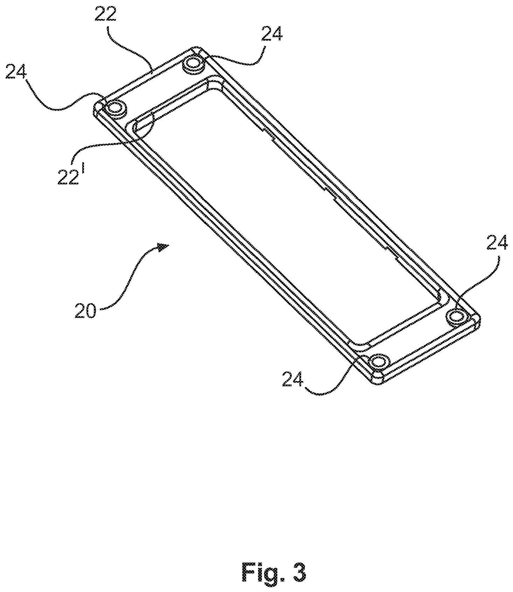

In der Fig. 3 ist das Dichtungselement 20 aus Fig. 2 in einer weiteren räumlichen Darstellung gezeigt, jedoch mit Blickrichtung auf die Unterseite, welche im montierten Zustand des Steckverbindergehäuses 1 mit der Montagfläche 3 in Kontakt steht.
Die dem Befestigungsflansch 10 abgewiesene Seite des Dichtungselements 20 weist zwei umlaufende Dichtlippen 22, 22' auf. Eine am inneren Rand verlaufende Dichtlippe 22' und eine am äußeren Rand verlaufende Dichtlippe 22.
Durch die zwei durchgehenden Dichtlippen 22, 22' wird eine besonders gute Abdichtung zwischen dem Dichtungselement 20 und einer Montagefläche 3 erzielt.
Zusätzlich weist die gezeigte Seite des Dichtungselements 20 Stützringe 24 auf. Diese sind in gleicher Anzahl wie die Dichthülsen 21 vorgesehen und befinden sich jeweils genau einer Dichthülse 21 auf der gegenüberliegenden Seite des Dichtungselements 20 zugewiesen.

Zweck der Stützringe 24 ist, das Dichtungselement 20 an den Bereichen, wo die Dichthülsen 21 von der gegenüberliegenden Seite auf das flache Dichtungselement 20 drücken abzustützen. Dadurch werden die Dichtlippen 22, 22' die dem Dichtungselement 20 angeformt sind ausgeglichen. Demnach weisen die Stützringe 24 erfindungsgemäß auch eine Höhe auf, die der Höhe der Dichtlippen 22, 22' entspricht.

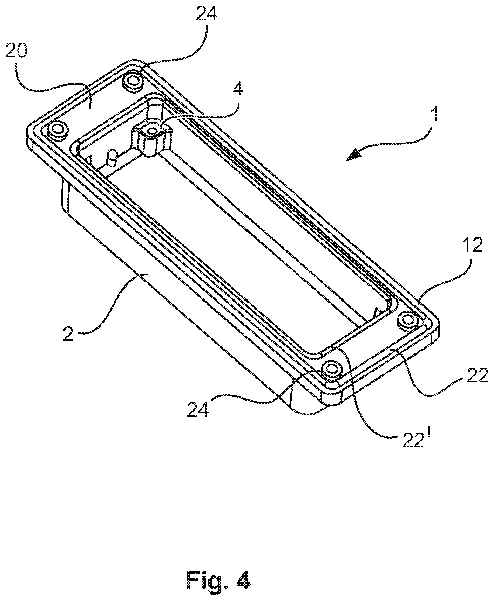

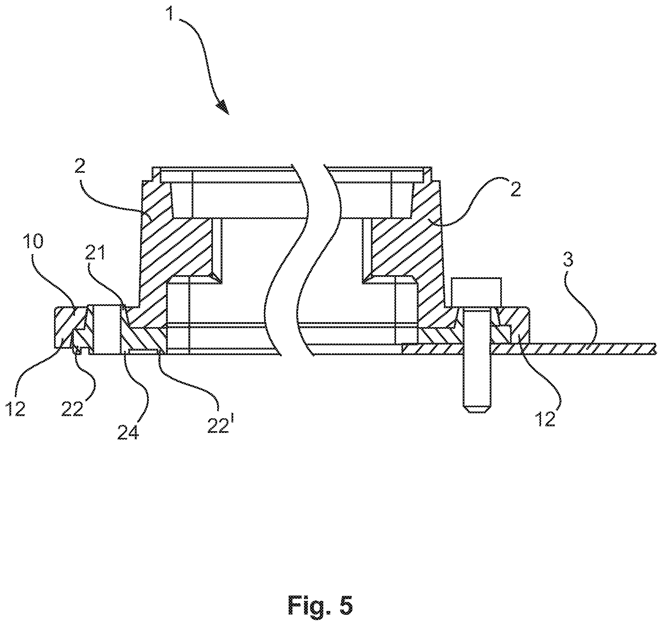

In der Fig. 4 ist ein Steckverbindergehäuse 1 mit einem eingesetzten Dichtungselement 20 dargestellt. Das Dichtungselement 20 ist auf dem Befestigungsflansch 10 angeordnet und wird von dem umlaufenden Kragen 12 umgeben. Die Dichthülsen 21 des Dichtungselements 20 sind in die Befestigungsbohrungen 11 eingeführt (hier nicht erkennbar, siehe Fig. 5). Die Fig. 5 zeigt letztlich eine Schnittdarstellung des erfindungsgemäßen Steckverbindergehäuses 1. Wobei die linke Hälfte einen nicht montierten Zustand darstellt und die rechte Hälfte das Steckverbindergehäuse 1 mit einer Schraube auf einer Montagefläche 3 montiert darstellt.

Links in Fig. 5 ist zu erkennen, wie eine Dichthülse 21 in eine Befestigungsbohrung 11 eingeführt ist. Dabei durchdringt die Dichthülse 21 die Befestigungsbohrung 11 vollständig und ragt bei vollständig eingesetztem Dichtungselement 20 über die Befestigungsbohrung 11 hinaus (hier oben dargestellt).

In dieser dargestellten Ausführungsform sind sowohl die Befestigungsbohrung 11 als auch die Dichtungshülse 21 konisch ausgebildet. Diese Ausgestaltung sorgt für eine besonders vorteilhafte Dichtfunktion.

An der unten dargestellten Seite des Dichtungselements 20 sind die zwei Dichtlippen 22, 22' zu erkennen. Um die Stärke der Dichtlippen 22, 22' auszugleichen ist unterhalb der Dichthülse 21 der Stützring 24 vorgesehen.

Im rechten Bereich der Fig. 5 ist das Steckverbindergehäuse 1 mit Hilfe einer Schraube an einer Montagefläche 3 befestigt.

Durch die erzeugte Anpresskraft wird das Dichtungselement 20 soweit zusammen gepresst, dass das Steckverbindergehäuse 1 auf dem Kragen 12 aufsitzt. Dabei dichten die Dichtlippen 22, 22' zwischen Montagefläche 3 und Dichtungselement 20 ab. Gleichzeitig dichtet die Dichtlippe 22" das Dichtungselement 20 zum Befestigungsflansch 10 ab.

Der erfindungsgemäße Überstand der Dichthülse 21 über die Befestigungsbohrung 11 wird durch den Schraubenkopf so zusammengepresst, dass auch am Schraubenkopf kein Eindringen von Umwelteinflüssen wie Staub, Dreck, Flüssigkeiten, etc. möglich ist.

### Bezugszeichenliste

- 1: Steckverbindergehäuse
- 2: Grundkörper
- 3: Montagefläche
- 4: Befestigungsaufnahme
- 10: Befestigungsflansch
- 11: Befestigungsbohrung
- 12: Kragen
- 13: Nocke
- 20: Dichtungselement
- 21: Dichtungshülse
- 22: Dichtlippe
- 23: Vertiefung
- 24: Stützring

## Patentansprüche

1. Steckverbindergehäuse (1), vorzugsweise zur Montage auf einer Montagefläche (3),
bestehende aus einem Grundkörper (2)
und einem am Grundkörper (2) angeformten Befestigungsflansch (10),
wobei der Befestigungsflansch (10) zumindest eine Befestigungsbohrung (11) aufweist,
und wobei dem Befestigungsflansch (10) auf der dem Grundkörper (2) abgewandten Seite ein Dichtungselement (20) angeordnet ist, welches in etwa der Form des Befestigungsflansches (10) entspricht,
wobei das Dichtungselement (20) zumindest eine hülsenförmige Anformung aufweist, welche eine Dichtungshülse (21) bildet,
wobei die Dichtungshülse (21) in der Befestigungsbohrung (11) angeordnet ist,
wobei die Dichtungshülse (21) die Befestigungsbohrung (11) zumindest vollständig durchdringt
**dadurch gekennzeichnet, dass**
die Befestigungsbohrung (11) sich, von der dem Grundkörper (2) angewandten Seite des Befestigungsflansches (10) zu der dem Grundkörper (2) zugewandten Seite des Befestigungsflansches (10), konisch verengt.

2. Steckverbindergehäuse (1) nach Anspruch 1,
**dadurch gekennzeichnet, dass**
die Außenkontur der Dichthülse (21) eine konische Form, der Befestigungsbohrung (11) entsprechend, aufweist.

3. Steckverbindergehäuse (1) nach einem der vorstehenden Ansprüche,
**dadurch gekennzeichnet, dass**
dem Befestigungsflansch (10) ein umlaufender Kragen (12) angeformt ist, wobei der umlaufende Kragen (12) sich weg vom Grundkörper (2) erstreckt.

4. Steckverbindergehäuse (1) nach Anspruch 3,
**dadurch gekennzeichnet, dass**
der umlaufende Kragen (12) das Dichtungselement (20) umgibt.

5. Steckverbindergehäuse (1) nach Anspruch 3 oder 4,
**dadurch gekennzeichnet, dass**
der umlaufende Kragen (12) flacher als das Dichtungselement (20) ist.

6. Steckverbindergehäuse (1) nach einem der vorstehenden Ansprüche,
**dadurch gekennzeichnet, dass**
das Dichtungselement (20) auf der dem Befestigungsflansch (10) abgewandten Seite zumindest eine, entsprechend der Form des Dichtungselements (20) verlaufende, Dichtlippe (22) aufweist.

7. Steckverbindergehäuse (1) nach Anspruch 6,
**dadurch gekennzeichnet, dass**
das Dichtungselement (20) zwei Dichtlippen (22, 22') aufweist, wobei eine erste Dichtlippe (22) am äußeren Rand des Dichtungselements (20) verläuft und eine zweite Dichtlippe (22') am inneren Rand des Dichtungselements (20) verläuft.

8. Steckverbindergehäuse (1) nach einem der Ansprüche 6 oder 7,
**dadurch gekennzeichnet, dass**
dem Dichtungselement (20) auf der dem Befestigungsflansch (10) abgewandten Seite zumindest ein, im Bereich der auf der gegenüberliegenden Seite angeordneten Dichtungshülse (21) angeordnete, Stützring (24) angeformt ist, wobei der Stützring (24) in etwa dem Durchmesser der Dichtungshülse (21) entspricht und in etwa die Höhe der Dichtlippe (22) aufweist.

9. Steckverbindergehäuse (1) nach einem der vorstehenden Ansprüche,
**dadurch gekennzeichnet, dass**
der Befestigungsflansch (10) auf der dem Dichtungselement (20) zugewandten Seite zumindest eine Nocke (13) aufweist, wobei die Nocke (13) in entsprechende Vertiefungen (23) des Dichtungselements (20) eingreifen.

10. Steckverbindergehäuse (1) nach einem der vorstehenden Ansprüche,
**dadurch gekennzeichnet, dass**
das Dichtungselement (20) aus einem elastischen Dichtungsmaterial gefertigt ist.

## Claims

1. Plug connector housing (1), preferably for mounting on a mounting surface (3), consisting of a basic body (2) and a fastening flange (10) which is .integrally formed on the basic body (2), wherein the fastening flange (10) has at least one fastening bore (11), and wherein a sealing element (20) is arranged on the fastening flange (10) on the side facing away from the basic body (2), said sealing element approximately corresponding to the shape of the fastening flange (10), wherein the sealing element (20) has at least one sleeve-shaped moulding which forms a sealing sleeve (21), wherein the sealing sleeve (21) is arranged in the fastening bore (11), wherein the sealing sleeve (21) at least completely penetrates the fastening bore (11), **characterized in that** the fastening bore (11) tapers conically from that side of the fastening flange (10) which faces away from the basic body (2) to that side of the fastening flange (10) which faces the basic body (2).

2. Plug connector housing (1) according to Claim 1, **characterized in that** the outer contour of the sealing sleeve (21) has a conical shape, corresponding to the fastening bore (11).

3. Plug connector housing (1) according to either of the preceding claims, **characterized in that** an encircling collar (12) is integrally formed on the fastening flange (10), wherein the encircling collar (12) extends away from the basic body (2).

4. Plug connector housing (1) according to Claim 3, **characterized in that** the encircling collar (12) surrounds the sealing material (20).

5. Plug connector housing (1) according to Claim 3 or 4, **characterized in that** the encircling collar (12) is flatter than the sealing element (20).

6. Plug connector housing (1) according to one of the preceding claims, **characterized in that** the sealing element (20) on the side facing away from the fastening flange (10) has at least one sealing lip (22) extending in a manner corresponding to the shape of the sealing element (20).

7. Plug connector housing (1) according to Claim 6, **characterized in that** the sealing element (20) has two sealing lips (22, 22'), wherein a first sealing lip (22) runs on the outer edge of the sealing element (20) and a second sealing lip (22') runs on the inner edge of the sealing element (20).

8. Plug connector housing (1) according to either of Claims 6 and 7, **characterized in that** at least one supporting ring (24) is integrally formed on the sealing element (20) on the side facing away from the fastening flange (10), the supporting ring being arranged in the region of the sealing sleeve (21) which is arranged on the opposite side, wherein the supporting ring (24) approximately corresponds to the diameter of the sealing sleeve (21) and is approximately the height of the sealing lip (22).

9. Plug connector housing (1) according to one of the preceding claims, **characterized in that** the fastening flange (10) on the side facing the sealing element (20) has at least one cam (13), wherein the cam (13) engages in corresponding depressions (23) of the sealing element (20).

10. Plug connector housing (1) according to one of the preceding claims, **characterized in that** the sealing element (20) is manufactured from an elastic sealing element.

## Revendications

1. Boîtier de connecteur enfichable (1), de préférence destiné au montage sur une surface de montage (3), composé d'un corps de base (2)
et d'une bride de fixation (10) formée sur le corps de base (2) ;
la bride de fixation (10) présentant au moins un alésage de fixation (11),
et un élément d'étanchéité (20) étant disposé sur la bride de fixation (10) sur le côté éloigné du corps de base (2), élément dont la forme correspond à peu près à la bride de fixation (10),
l'élément d'étanchéité (20) présentant au moins une conformation du type manchon qui forme un manchon d'étanchéité (21),
le manchon d'étanchéité (21) étant disposé dans l'alésage de fixation (11),
le manchon d'étanchéité (21) traversant au moins complètement l'alésage de fixation (11),
caractérisé en que
l'alésage de fixation (11) se rétrécit en'cône à partir du côté de la bride de fixation (10) éloigné du corps de base (2) vers le côté de la bride de fixation (10) tourné vers le corps de base (2).

2. Boîtier de connecteur enfichable (1) selon la revendication 1,
**caractérisé en ce que**
le contour extérieur du manchon d'étanchéité (21) présente une forme conique correspondant à l'alésage de fixation (11).

3. Boîtier de connecteur enfichable (1) selon l'une des revendications précédentes,
**caractérisé en ce**
**qu'**une collerette (12) périphérique est formée sur la bride de fixation (10), la collerette (12) périphérique s'étendant en s'éloignant du corps de base (2).

4. Boîtier de connecteur enfichable (1) selon la revendication 3,
**caractérisé en ce que**
la collerette (12) périphérique entoure l'élément d'étanchéité (20).

5. Boîtier de connecteur enfichable (1) selon la revendication 3 ou 4,
**caractérisé en ce que** la collerette (12) périphérique est plus plate que
l'élément d'étanchéité (20).

6. Boîtier de connecteur enfichable (1) selon l'une des revendications précédentes,
**caractérisé en ce que**,
sur le côté éloigné de la bride de fixation (10), l'élément d'étanchéité (20) présente au moins une lèvre d'étanchéité (22) située de façon à correspondre à la forme de l'élément d'étanchéité (20).

7. Boîtier de connecteur enfichable (1) selon la revendication 6,
**caractérisé en ce que**
l'élément d'étanchéité (20) présente deux lèvres d'étanchéité (22, 22'), une première lèvre d'étanchéité (22) étant située sur le bord extérieur de l'élément d'étanchéité (20) et une deuxième lèvre d'étanchéité (22') étant située sur le bord intérieur de l'élément d'étanchéité (20).

8. Boîtier de connecteur enfichable (1) selon l'une des revendications 6 ou 7,
**caractérisé en ce**
**qu'**au moins une bague d'appui (24) est formée sur l'élément d'étanchéité (20) sur le côté éloigné de la bride de fixation (10) en étant disposée dans la zone du manchon d'étanchéité (21) disposé sur le côté opposé, la bague d'appui (24) correspondant à peu près au diamètre du manchon d'étanchéité (21) et présentant à peu près la hauteur de la lèvre d'étanchéité (22).

9. Boîtier de connecteur enfichable (1) selon l'une des revendications précédentes,
**caractérisé en ce que**
la bride de fixation (10) présente au moins une came (13) sur le côté tourné vers l'élément d'étanchéité (20), la came (13) engrenant dans des creux (23) correspondants de l'élément d'étanchéité (20).

10. Boîtier de connecteur enfichable (1) selon l'une des revendications précédentes,
**caractérisé en ce que**
l'élément d'étanchéité (20) est réalisé dans un matériau d'étanchéité élastique.
